# EUROPEAN PATENT SPECIFICATION

(11) **EP 0 738 528 B1**
(45) Date of publication and mention of the grant of the patent: **31.07.2002**
(21) Application number: 96106185.0
(22) Date of filing: 19.04.1996
(51) Int. Cl.: B01D 27/00, B01D 27/06, B01D 27/08, B01D 27/10

(54) **Filter**
Filter
Filtre

(30) Priority: 21.04.1995 JP 9672195
(43) Date of publication of application: 23.10.1996
(73) Proprietor: DENSO CORPORATION, Kariya-City Aichi-Pref. 448 (JP)
(72) Inventor: Matsumoto, Noriya, Kariya-City, Aichi-pref. (JP); Yoshihiko, Ohya, Kariya-City, Aichi-pref. (JP)
(74) Representative: Pellmann, Hans-Bernd, Dipl.-Ing.

(56) References cited:
- EP-A- 0 081 597
- DE-A- 3 325 772
- US-A- 2 599 604
- US-A- 4 539 108
- US-A- 4 824 564

## Description

The present invention relates to a filter according to the preamble of the independent claim 1.

From the document US-A-2599604 a generic filter is known whose filter element is formed by winding a filter element around a core. Inside the core, a centrally located standpipe is provided. Furthermore, at the bottom end of the core holes are provided through which the filtered oil is allowed to flow into the exit stand pipe. From the further document US-A-04539108 another filter is known; within its filter element a hole (fluid passage) is provided.

Conventional filter element fixing structures for filters such as a fuel filter have been disclosed in JP-U-60-108759, JP-U-1-139071 and JP-A-2-126907.

The fuel filter disclosed in the JP-U-60-108759 includes a center pipe portion with a ring plate-like or cup-like support portion having a plurality of through holes being integrally formed at an end portion, an element is spirally wound around the circumferential surface of the center pipe portion, and the wound element is held by the support portion.

The sedimenter disclosed in JP-U-1-139071 includes a filter element on the outer circumference of a cylindrical protector, and a bevel member is disposed between a fuel passage formed within the protector and a float for detecting the level of the water sedimented from fuel so as to be expanded in the downstream direction to prevent any erroneous operation of the float in case that fuel flows at a high flow rate.

The filter element disclosed in JP-A-2-126907 is formed in a cylindrical shape with a plurality of tubes each having a generally circular cross section, which is arranged in parallel in the axial direction. This filter increases the filtering area and improves the filterability by so arranging that the gaps between the tubes are closed at one end portion of the filter element for defining the inlet of the tubes, the insides of the tubes are closed at the other end part, and the total cross sectional area of all the gaps between the tubes is set to be smaller than that of all the insides of the tubes and at the same time larger than the minimum cross sectional area of the passages for supplying fuel to the tubes.

According to the fuel filter disclosed in JP-A-60-108759, the fuel having flown from the one end side of the fuel filter flows through the inside of the center pipe portion to the other end side of the fuel filter and reaches the other end portion of the element wound around the center pipe portion. Then, the fuel reached the other end portion of the element returns to the one end side of the fuel filter by passing through the element toward the one end portion of the element, and during which the fuel is filtered and foreign substances contained in fuel are caught. Accordingly, the inside of the center pipe portion functioning as the axis for winding element is used as the fuel passage before the fuel is filtered, and the space for housing the element is reduced by as much as space occupied by the fuel passage. That is, there is a problem that the filtering area is reduced by the fuel passage and the filterability relative to the size of the fuel filter is lowered.

According to the sedimenter disclosed in JP-U-1-139071, as is the case with the above fuel filter disclosed in the JP-U-60-108759, as the fuel before being filtered flows through the inside of the protector positioned in the center of the axis of the filter to the opposite side of the fuel inlet, a bevel member for avoiding the influence of the velocity of the fuel in case that the fuel flows at a high flow rate into the opposite side of the fuel inlet is disposed on the upstream side of the float to prevent erroneous operation of the float. Therefore, the filtering area of the filter is reduced by as much space occupied by the protector and the filterability relative to the size of the fuel filter is lowered, and further, the structure is complicated, because a bevel member is additionally needed and the number of parts and components is increased.

According to the filter element disclosed in the JP-A-2-126907, the fuel having flown into the one end side of the fuel filter flows from one end of the tubes located on the side of the fuel inlet to the other end of the same, and the fuel after being filtered flows out of the other end side of the fuel filter. Therefore, as is the case with the fuel filter disclosed in JP-U-60-108759 and the sedimenter disclosed in the JP-U-1-139071, in a filter of a type in which the fuel having flown from the guide inlet of the filter element located above the filter flows to the opposite side of the guide inlet located under the filter, and then the water is sedimented from the fuel by the difference in specific gravity between the fuel and the water, there is a need to form a fuel passage in the axial direction within the filter element. As a result, the filtering area is reduced and the filterability is lowered by the existence of the fuel passage formed within the filter element, and therefore the potential function of the filter element can not be performed sufficiently.

In view of the above problems, it is an object of the present invention to provide a filter which can reduce the size of the housing. Furthermore a filter is to be provided which can prevent erroneous operation of a float type sensor.

The above-stated object is achieved by the combination of features of the independent claim 1. Preferred embodiments of the subject-matter of claim 1 are set forth in the dependent claims.

According to an embodiment of the present invention, a filter includes a columnar filter element which is completely filled with a filter material for filtering fluid, a housing for housing the filter element and being provided with an inlet portion and an outlet portion, through which said fluid passes, and an element holding body formed in a cylindrical shape and being housed within the housing so as to form a gap with an inner wall surface of the housing. The filter element is inserted into the element holding body from an opening at one end thereof. The element holding body liquid-tightly holds an outer circumference of said filter element therewithin. The other end of the element holding body is liquid-tightly connected to one of the inlet portion and the outlet portion.

According to the above configuration, as one end of the holding body liquid-tightly holds the outer circumference of the columnar element and the other end of the holding body is liquid-tightly connected to the inlet portion or outlet portion of the housing, the fluid having flowed therein from the side of the other end portion of the holding body flows into the element not from the one end side of the element held by the one end of the holding body but from the other end side not held by the holding body. In this way, the fluid can flow from the other end side of the element without forming a passage in the axial direction within the filter element through which the fluid can pass. As a result, the volume of the element can be increased by as much as the passage that is not formed within the element, and the filterability of the element can be improved. In addition, by improving the filterability of the element improves in this way, the size of the element can be reduced and therefore the housing can be downsized.

It is preferable that the inlet portion and the outlet portion are lined up within the housing and the fluid having flowed therein from the inlet part flows through a gap formed between the outer circumference of the holding body and the inner wall of the housing. As the fluid having flowed from the inlet part flows through the gap between the outer circumference of the holding body and the inner wall of the housing, even if the inlet portion and the outlet portion are lined up within the housing, the flow of the fluid flowing from the inlet portion and the flow of the fluid flowing out to the outlet portion can be separated by the holding body.

A float type sensor may be mounted on the one end side of the holding body within the housing. In this configuration, as the float type sensor is mounted on the one end side of the holding body within the housing, if, for example, the fluid contains water, etc., the accumulated quantity of the water, etc. sedimented from the fuel can be detected. In addition, as the fluid having flowed from the inlet part of the housing and having flowed along the outer circumferential wall of the holding body flows along the inner wall of the housing, the direct influence of the velocity of the fluid on the float type sensor can be controlled. As a result, erroneous operation of the float type sensor can be prevented.

The fluid to be filtered may be fuel. The filter of the present invention described above can be applied to the fuel filter.

Embodiments of the present invention will now be described referring to the appended drawings.
FIG.1 is a partial cross-sectional view illustrating the overall construction of a spin-on type filter according to the first embodiment of the present invention;
FIG. 2 is a side half cross-sectional view of the filter part of the spin-on type filter according to the first embodiment;
FIG. 3 is a plain view of the filter portion viewed in the direction indicated by an arrow III of FIG. 2;
FIG. 4 is a perspective view of the filter element of the filter portion according to the first embodiment;
FIG. 5 is a side half sectional view of the filter portion of a spin-on type filter according to the second embodiment of the present invention;
FIG. 6 is a plain view of the filter portion viewed in the direction indicated by an arrow VI of FIG. 5;
FIG. 7 is an enlarged view of the portion enclosed by a one-dot chain line VII of FIG. 5;
FIG. 8 is a side half cross-sectional view of the filter portion of a spin-on type filter according to the third embodiment of the present invention;
FIG. 9 is a plain view of the filter portion viewed in the direction indicated by an arrow IX of FIG. 8; and
FIG. 10 is an enlarged view of the part enclosed by a one-dot chain line X of FIG. 8.

A first embodiment is described.

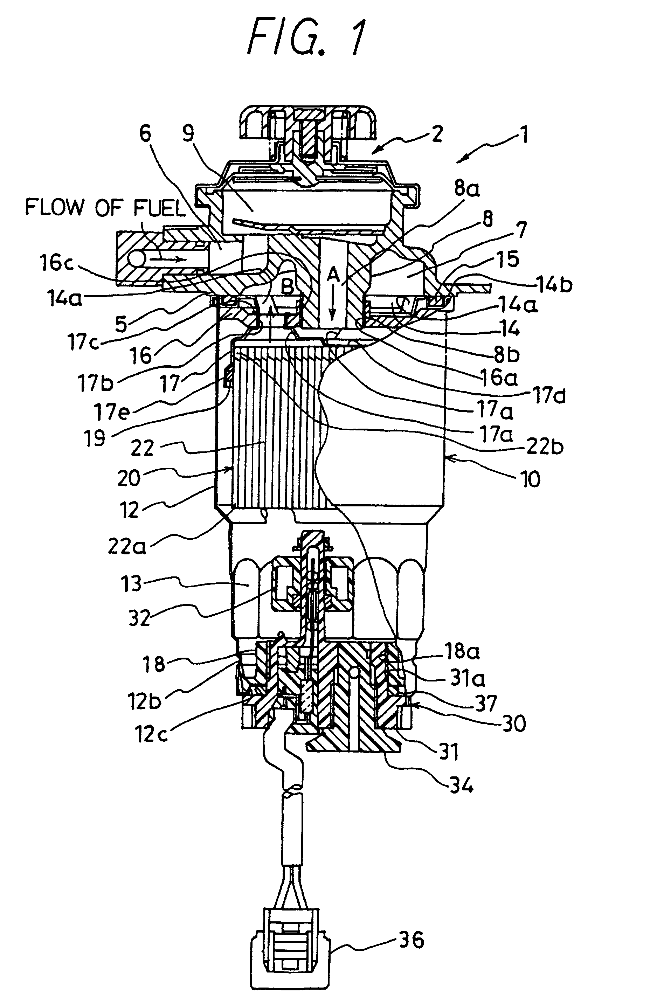

The first embodiment is illustrated in FIGS. 1 through 4. in which the present invention is applied to a spin-on type filter for use in filtering fuel to be supplied to an internal combustion engine.

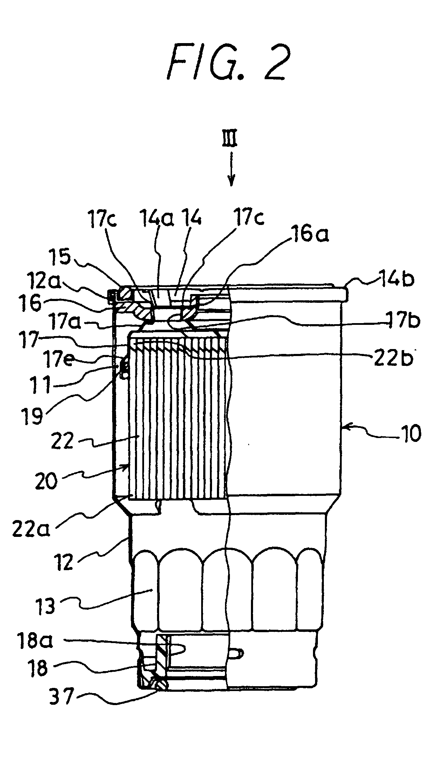

As illustrated in FIG. 2, a spin-on type filter 1 is disposed within a fuel supply pipe (not illustrated) supplying fuel to a diesel internal combustion engine. The spin-on type filter 1 is provided with an element 20 within a casing 12 to remove foreign substances, such as dust, rust, carbon and water, contained within fuel. As the element 20 has a finite service life for removing foreign substances, when the service life of the element 20 expires, the dead element 20 has to be replaced with a new element. The "spin-on" type is a type of filters of which the element 20 is replaced together with a casing 12, etc. in a package.

The spin-on type filter 1 includes a filter portion 10 provided therein with the element 20 made of filter paper, a cap 5 mounted on the internal combustion engine and provided with the filter portion 10 on the lower portion thereof and a hand pump 2, and a sensor portion 30 mounted on the other end portion of the filter part 10 and provided with a float type sensor 32.

Within the cap 5 are formed an inlet 6 from which fuel flows in, an outlet 7 of which fuel flows out, and a cylindrical fuel feed-out portion 8 feeding out the fuel flowing in from the inlet 6 to the filter portion 10. Between the inlet 6 and the fuel feed-out portion 8 is formed a pump room 9 pressurized by the hand pump 2 mounted on the upper portion of the cap 5. On the inside of the fuel feed-out portion 8 is formed a fuel passage 8a. On the outer circumferential wall of the fuel feed-out portion 8 is formed a male thread portion 8b which can fittingly be engaged with a female thread portion 16c of a reinforcing plate 16 (described later).

As illustrated in FIGS. 1 and 2, the filter portion 10 includes the casing 12, a closing plate 14, the reinforcing plate 16, an element holding plate 17, a sensor holding plate 18 and the element 20.

The casing 12 is formed in a cylindrical shape. On the end portion thereof on which the cap 5 is adopted to be mounted are provided with the closing plate 14 and the reinforcing plate 16, and on the other end portion thereof on which the sensor portion 30 is adopted to be mounted is provided with the sensor holding plate 18. Within the casing 12 is housed the cylindrical element 20. Below (viewed in FIG. 1) the element 20 is provided a space portion 13 which functions as a sedimenter for pooling the water sedimented from the fuel.

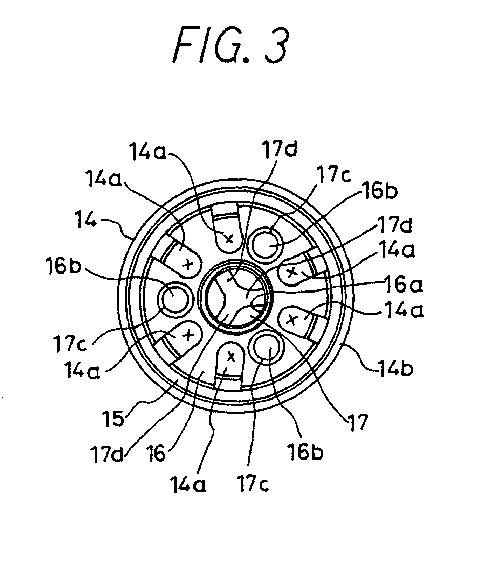

As illustrated in FIGS. 2 and 3, the closing plate 14 is provided with a ring portion 14b which can be fixed by means of caulking to a circumferential portion 12a of the casing 12 on an end side thereof, and also provided with radially and inwardly extending six L-shaped mount portions 14a which, as illustrated in FIG. 3, are welded to the reinforcing plate 16 in the respective x-marked positions. Between the ring portion 14b and the bases of the respective mounting portions 14a is formed an annular groove, and an O ring 15 is fittingly set in this annular groove.

The reinforcing plate 16 is shaped like a disk with the outside diameter being roughly equal to the inside diameter of the casing 12 on the one end portion side. On the inner circumferential wall of a through hole 16a made in the center of the disk shape are formed the female thread portion 16c which can be engaged with the male thread portion 8b of the fuel feed-out portion 8. In addition, in the reinforcing plate 16 are made three through holes 16b provided circumferentially at intervals of approximately 120° for use as mounting holes for mounting the element holding plate 17 and as a fuel passage. Here, the through holes 16a is equivalent to the "inlet portion" referred to in the claims, and the through holes 16b is equivalent to the "outlet portion" referred to in the claims.

The element holding plate 17 is cylindrically formed with a bottom with the inside diameter being roughly equal to the outside diameter of the element 20 to hold the end portion of the element 20 by the side wall thereof. On the bottom portion of the cylindrical shape of the element holding plate 17 are formed three tapered portions 17a axially extending to the opposite side thereof so as to be coincided with the respective positions of the through holes 16b made in the reinforcing plate 16. In addition, at the tip end of each tapered portion 17a is formed a tube portion 17b with the outside diameter being roughly equal to the inside diameter of the through hole 16b. Each tube portion 17b is inserted into each through hole 16b, then the tip end portion 17c of each tube portion 17b is radially extended to the outside and caulked to the reinforcing plate 16, and thereby the element holding plate 17 is fixed to the reinforcing plate 16. By this fixing by means of caulking, the top surface of the opening portion around the each through hole 16b is closely adhered to the outer circumferential wall of the tip end portion 17c of each tube portion 17b. This way prevents the fuel before being filtered which flows in the direction indicated by an arrow A in FIG. 1 and the fuel after being filtered which flows in the direction indicated by an arrow B in FIG. 1 from being mixed with each other through gaps formed between the inner circumferential walls of the through holes 16b and the outer circumferential walls of the tube portions 17b. Here, the method of fixing the element holding plate 17 to the reinforcing plate 16 is not limited to caulking but may be any other means, such as welding.

On the outer wall of the bottom portion of the element holding plate 17 is formed a groove portion 17d through which the fuel fed from the fuel feed-out portion 8 of the cap 5 in the direction indicated by the arrow A in FIG. 1 flows. As illustrated in FIG. 3, the groove portion 17d radially and outwardly extends in three directions, avoiding the positions in which the tapered portions 17a are formed, to be Y-shaped on the outer wall of the bottom portion of the element holding plate 17. In this way, it is easy for the fuel having flowed through the fuel passage 8a in the fuel feed-out portion 8 to gather within the groove portion 17d branched into three grooves and to radially and outwardly flow therethrough.

Furthermore, as the tip end portion area 17e including the side wall tip end portion of the element holding plate 17 is cylindrically formed with the inside diameter being larger than the outside diameter of the element 20, an annular gap is formed between the tip end portion area 17e and the element 20. By filling the annular gap with an adhesive, the inner circumferential wall of the element holding plate 17 and the outer circumferential wall of the element 20 are fixed and sealed all over the entire length thereof. In this way, it is possible to prevent the fuel before being filtered from flowing from the side wall tip end portion of the element holding plate 17 into an end portion 20a of the element 20.

As the outside diameter of the tip end portion area 17e is smaller than the inside diameter of the casing 12, a gap 11 is formed between the outer circumferential wall of the tip end portion area 17e and the inner circumferential wall of the casing 12. The gap 11 functions as a fuel passage for the fuel having flowed out to the outer wall and outer circumferential wall of the element holding plate 17, downwardly (viewed in FIG. 2) guiding the fuel.

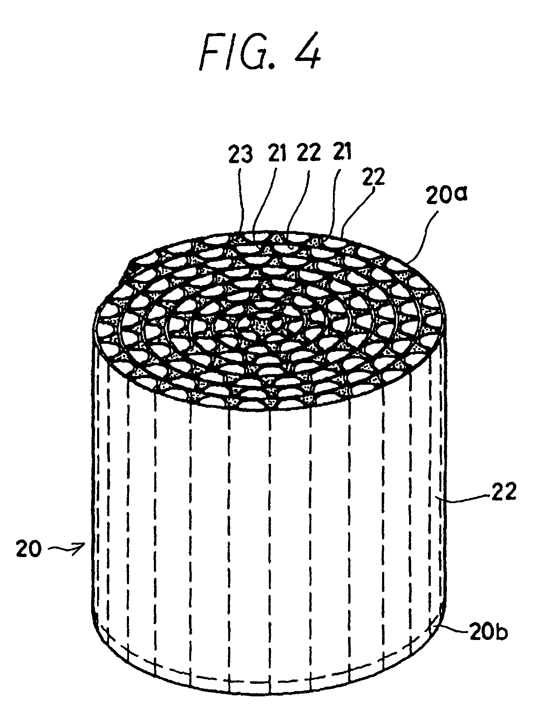

As illustrated in FIG. 4, the element 20 includes a corrugated plate 21 and a flat plate 22, both made of filter paper, unwoven cloth, wire gauze, synthetic fiber, textile or the like. The element 20 is formed by winding the corrugated plate 21 and the flat plate 22 together so that the corrugated plate 21 and the flat plate 22 can alternately be positioned. Then, the corrugated plate 21 and the flat plate 22 are fixedly bonded to each other with an adhesive 23 at such portions that the ridge portions or groove portions of the corrugated plate 21 contact the flat plate 22.

At the other end portion 20b for defining the outlet of the fuel after being filtered, the open ends of a plurality of passages segmentedly formed by winding the corrugated plate 21 and the flat plate 22 together are alternately closed. That is, as the other end openings of the passages segmentedly formed by the corrugated plate 21 and the flat plate 22 can be closed by crushing the corrugated plate 21 against the flat plate 22 in the state that the corrugated plate 21 and the flat plate 22 are wound to be alternately positioned, the other end portion of the plurality of passages segmentedly formed by the corrugated plate 21 and the flat plate 22 are alternately closed. On the other hand, at the one end portion 20a constituting the inlet of fuel before being filtered, the one end openings of those passages which are not closed on the side of the other end portion 20b, of all the plurality of passages described above, are closed with the adhesive 23. Therefore, the plurality of passages having openings on the side of one end portion 20a are closed at the other end 20b thereof, while the plurality of passages closed on the side of one end portion 20a are opened at the other end 20b thereof.

In this way, as the fuel flowing from the one end portion 20a of the element 20 into the plurality of passages having openings on one end side passes through the corrugated plate 21 and the flat plate 22 by passing through the pores in the fibers, etc. of the corrugated plate 22 and flat plate 21 segmenting the plurality of passages, the fuel can flow into the passages having openings on the other end side. On the other hand, foreign substances, etc. larger in particle diameter than the pores in the fibers, etc. of the corrugated plate 21 and flat plate 22, being unable to pass through the corrugated plate 21 and the flat plate 22, remain within the plurality of passages having opening on the one end side and closed on the other end side. As a result, the fuel flowing out of the other end portion 20b of the element 20 has been filtered by then.

As illustrated in FIG. 1, the sensor holding plate 18 is formed in a cylindrical shape with the outside diameter being substantially equal to the inside diameter of the other end portion side of the casing 12. On the inner circumferential wall of the sensor holding plate 18 is formed a male thread portion 18a which can be engaged with a female thread portion 31a of the sensor portion 30 (described later). The sensor holding plate 18 is fixed to the casing 12 by caulked portions 12b and 12c formed at the other end portion of the casing 12.

The float type sensor 32, a drain cock 34 and a connector 36, which are the main components of the sensor portion 30, are mounted to the housing 31. On the outer circumferential wall of the housing 31 is formed the male thread portion 31a which can be engaged with the female thread portion 18a of the sensor holding plate 18. When the sensor portion 30 is mounted to the sensor holding plate 18 by the engagement of the male thread portion 31a with the female thread portion 18a, an O ring 37 is interposed between the sensor holding plate 18 and the sensor portion 30 so that the sensor portion 30 and the sensor holding plate 18 can liquid-tightly contact to each other.

An operation of the spin-on type filter 1 will now be described referring to FIGS. 1 through 3.

As illustrated in FIG. 1, fuel containing foreign substances flows from a fuel supply pipe (not illustrated) into the inlet 6, then flows through the pump room 9 and the fuel passage 8a in the direction indicated by the arrow A in FIG. 1, and then flows into the filter portion 10. As the fuel feed-out portion 8 of the cap 5 is screw clamped to the reinforcing plate 16 of the filter portion 10, the fuel having flowed into the filter portion 10 flows to the outer circumferential wall surface of the bottom portion of the element holding plate 17 without flowing to the top surface of the closing plate 14. Then, the fuel is gathered within the groove portion 17d with three branch grooves converged in a Y shape upon the center of the element holding plate 17 as illustrated in FIG. 3. The gathered fuel flows radially and outwardly through the three branch grooves of the groove portion 17d, then flows along the outer circumferential wall of the element holding plate 17, then passes through the gap between the inner wall of the casing 12 and the side wall of the element 20, and then reaches the one end portion 20a of the element 20.

The fuel containing foreign substances that has reached the one end portion 20a of the element 20 flows within the element 20 toward the other end portion 20b. Before reaching the other end portion 20b, the fuel passes through the corrugated plate 21 and the flat plate 22 by passing through the pores in the fibers, etc. of the corrugated plate 21 and flat plate 22 segmenting the plurality of passages. Foreign substances, etc. larger in particle diameter than the pores in the fibers, etc. of the corrugated plate 21 and flat plate 22, being unable to pass through the corrugated plate 21 and the flat plate 22, remain within the plurality of passages having opening on the one end side and closed on the other end side, whereby foreign substances, etc. can be removed from the fuel.

The fuel, from which foreign substances, etc. have been removed while passing though the plurality of passages opened on the one end side and closed on the other end side, flows from the other end portion 20b of the element 20 in the direction indicated by the arrow B in FIG. 1, and passes through the inside of the tube portion 17b of the element holding plate 17. Thereafter, the fuel passes through the top surface of the closing plate 14, and exits from the outlet 7 into the fuel supply pipe (not illustrated).

Here, if the fuel contains water, as the water is larger in specific gravity than the fuel, the water is sedimented from the fuel and pooled within the space portion 13 on the lower portion of the casing 12. The level of the water pooled within the space portion 13 is monitored by the float type sensor 32 of the sensor portion 30, and according to the monitor result, sensor signals are outputted from the connector 36 and transferred to an electronic control unit (not illustrated). When the level of the water pooled within the space portion 13 reaches a preset level, the electronic control unit alerts the operator, etc. of the internal combustion engine to drain the water. The water is drained by opening the drain cock 34 and applying pressure thereto by the hand pump 2 located on the upper portion of the filter portion 10.

According to the first embodiment, as the element holding plate 17, which is formed into a cylinder with bottom, holds the other end portion 20b of the cylindrical element 20 with the side wall thereof, the fuel having flowed to the outer circumferential wall surface of the bottom portion of the element holding plate 17 can flow radially and outwardly and pass through the gap between inner wall of the casing 12 and the side wall of the element 20. In this way, the fuel containing foreign substances can flow from the side of the other end portion 20b of the element 20 to the one end portion 20a of the same without forming fuel passages in the axial direction within the element 20. Accordingly, the volume of the element 20 can be increased by as much as the volume of fuel passages that should otherwise be provided within the element 20, and therefore the filterability of the element 20 can be improved. In addition, by the increasing in the volume of the element 20, the filtering area can be increased, whereby the filterability of the element 20 can further be improved.

Furthermore, according to the first embodiment, the element holding plate 17 permits the fuel having flowed therein by the element holding plate 17 to pass through the gap between the inner wall of the casing 12 and the side wall of the element 20. Therefore, if the flow rate of the fuel is high, the fuel can be pass through the gap between the inner wall of the casing 12 and the side wall of the element 20 and at the same time flow along the inner circumferential wall surface of the casing 12 to the side of the sensor portion 30. In this way, even if the float type sensor 32 is located on the side of the one end portion 20a of the element 20, there is no possibility that the fuel having flowed from the element holding plate 17 is received in the axial direction in which the movable portion of the float type sensor 32 operates. As a result, any erroneous operation of the float type sensor 32 caused by the velocity of the fuel can be prevented.

In the first embodiment, it is so arranged that the fuel before being filtered flows into the filter portion 10 through the through hole 16a provided in the center of the reinforcing plate 16 and the fuel after being filtered flows out of the filter portion 10 through the three through holes 16b provided around the through holes 16a. However, the present invention may reversely be constructed. That is, it may be so arranged that the fuel after being filtered flows out of the filter portion through the hole provided in the center of the reinforcing plate and the fuel before being filtered flows into the filter portion through a plurality of through holes provided in the circumference of the through hole.

A second embodiment is described.

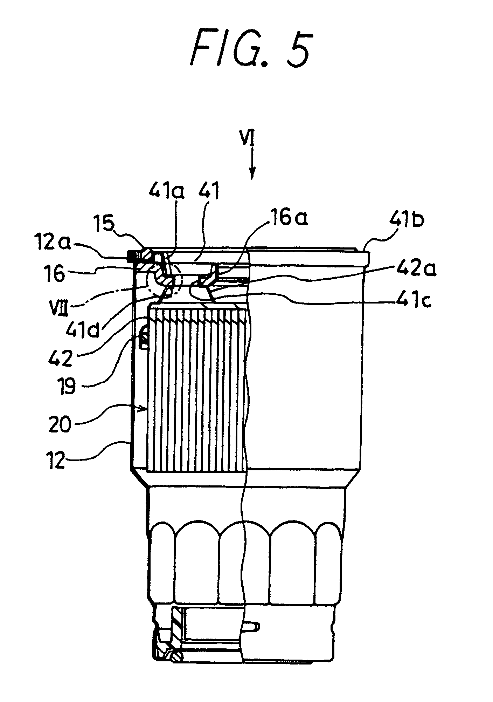

The second embodiment is illustrated in FIGS. 5 through 7, in which a filter element fixing structure according to the present invention is applied to a spin-on type filter. The portions of the construction essentially identical with the portions of the construction of the first embodiment are denoted with the same reference numerals as those of the first embodiment.

The second embodiment illustrated in FIGS. 5 through 7 is a case where a closing plate 41 is not welded to the reinforcing plate 16 but both the closing plate 41 and an element holding plate 42 are fixed by means of caulking to the through holes 16b of the reinforcing plate 16.

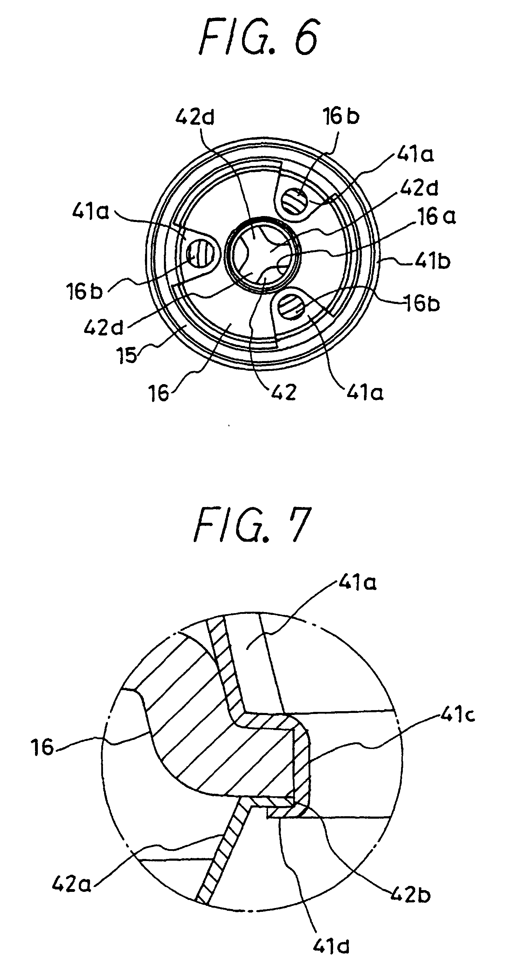

As illustrated in FIGS. 5 and 6, the closing plate 41 is provided with a ring portion 41b which can be fixed by means of caulking to a circumferential portion 41a of the casing 12 on the one end portion side thereof, and also provided with radially and inwardly extending wide L-shaped mount portions 41a formed circumferentially at intervals of approximately 120° so as to positionally be corresponding to the respective through holes 16b provided in the reinforcing plate 16. Furthermore, in each mount portions 41a is provided a through hole with the diameter slightly smaller than the inside diameter of the through hole 16b, and a tube portion 41c extending downwardly (viewed in FIG. 5) from the circumference of each through hole 16 is formed. The tube portion 41c has the outside diameter substantially equal to the inside diameter of the through hole 16b, and the axial length of the tube portion 41c is set to be larger than the sum of the plate thickness of the reinforcing plate 16 and plate thickness of the element holding plate 42 (described later).

As illustrated in FIG. 5, the element holding plate 42 has such a shape that excludes the tube portions 17b from the element holding plate 17 of the first embodiment. Specifically, at the tip end of each tapered portion 42a is provided a through hole 42b with the diameter being substantially equal to the diameter of the through holes 16b of the reinforcing plate 16 of the first embodiment, and on the outer wall of the bottom portion of the element holding plate 42 is formed a groove portion 42d branched into three grooves converging upon the center of the element holding plate 17 in a Y shape.

As illustrated in FIG. 7, the circumferential portion of each through hole 16b of the reinforcing plate 16 is so positioned as to be coincided with the circumferential portion of each through hole 42b of the element holding plate 42, and then each tube portion 41c of the closing plate 41 is penetrated through both the corresponding through hole 16b and the through hole 42b. In this state, as the tip end portion 41d of each tube portion 41c protrudes from the corresponding through hole 42b, the tip end portion 41d radially extends to the outside and caulked to the element holding plate 42. As a result, both the closing plate 41 and the element holding plate 42 are fixed to the through holes 16b of the reinforcing plate 16.

According to the second embodiment, as both the closing plate 41 and the element holding plate 42 are fixed to the through holes 16b of the reinforcing plate 16 by means of caulking, there is no need to weld the closing plate to the reinforcing plate as described in the first embodiment. Moreover, both the closing plate 41 and the element holding plate 42 can concurrently be fixed to the reinforcing plate 16 in one caulking process. As a result, as welding process can be eliminated from the assembling process, production equipment costs can be reduced. In addition, as assembling man-hour can be reduced, product costs can also be reduced.

A third embodiment is described.

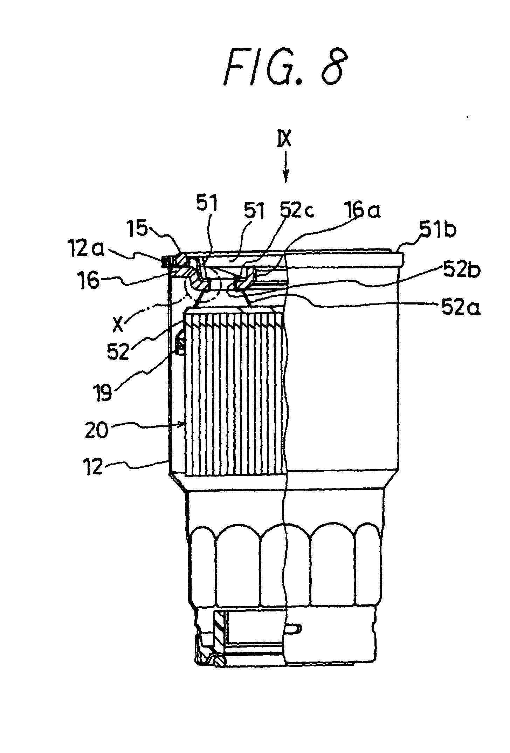

The third embodiment is illustrated in FIGS. 8 through 10, in which a filter element fixing structure according to the present invention is applied to a spin-on type filter. The portions of the construction essentially identical with the portions of the construction of the first embodiment are denoted by the same reference numerals as those of the first embodiment.

The third embodiment illustrated in FIGS. 8 through 10 is a case where a closing plate 51 is not welded to the reinforcing plate 16 but both the closing plate 51 and an element holding plate 52 are fixed by means of caulking to the through holes 16b of the reinforcing plate 16.

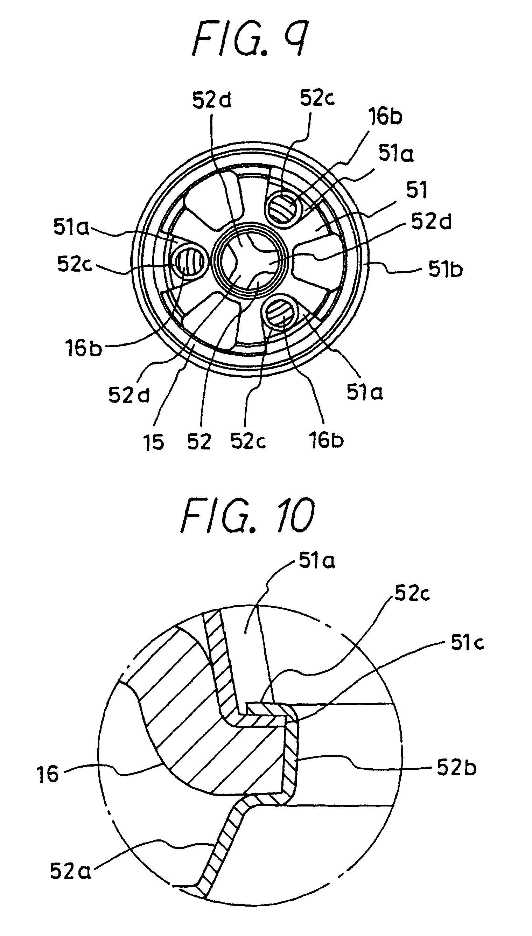

As illustrated in FIGS. 8 and 9, the closing plate 51 is provided with a ring portion 51b which can be fixed by means of caulking to the circumferential portion 12a of the casing 12 on the one end portion side thereof. The closing plate 51 is also provided with radially and inwardly extending wide L-shaped mount portions 51a formed circumferentially at intervals of approximately 120° so as to be corresponding to the respective positions of the through holes 16b provided in the reinforcing plate 16. Furthermore, in each mount portion 51a is provided a through hole 51c with the diameter roughly equal to the inside diameter of the through hole 16b.

As illustrated in FIG. 8, the element holding plate 52 is roughly the same in shape as the element holding plate 17 of the first embodiment. Specifically, the element holding plate 52 of third embodiment is different from the element holding plate 17 of the first embodiment in that the axial length of a tube portion 52b formed at the tip end of each tapered portion 52a is so set as to be larger than the sum of the plate thickness of the closing plate 51 and the plate thickness of the reinforcing plate 16. Furthermore, like the element holding plate 17 of the first embodiment, on the outer wall of the bottom portion of the element holding plate 52 is formed three branch grooves of a groove portion 52d converging upon the center of the element holding plate 17 in a Y shape.

As illustrated in FIG. 10, the circumference portion of each through hole 16b of the reinforcing plate 16 is so positioned as to be coincided with the circumference portion of each hole 51c of the element holding plate 52, and then each tube portion 52b of the element holding plate 52 is penetrated through both the through hole 16b and the through hole 51c. In this state, as the tip end portion 52c of each tube portion 52b protrudes from the through hole 42b, each tip end portion 52b is radially extended to the outside and caulked to the closing plate 51. As a result, the closing plate 51 and the element holding plate 52 are fixed to the through holes 16b of the reinforcing plate 16 by means of caulking.

According to the third embodiment, welding process can be eliminated from the assembling process, and assembling man-hour can also be reduced like the second embodiment. As a result, both production equipment costs and product costs can be reduced.

In the above embodiments, the present invention is applied to the spin-on type filter 1. However, the present invention should not be limited to the above but may be embodied in many other forms without departing from the scope of the invention. For example, the present invention may be applied to a type of filters in which the reinforcing plate is structured integrally with the cap so that the element can be replaced not together with the reinforcing plate, the casing, etc. but alone, or to a type of filters in which the element is replaced together with a half of the split type casing.

Furthermore, in the above embodiments, the filter element fixing structure according to the present invention is applied to the spin-on type filter 1 for use in filtering fuel to be supplied to an internal combustion engine, particularly a diesel engine. However, the present invention should not be limited to the above but may be embodied in many other forms without departing from the scope of the invention. For example, the filter element fixing structure according to the present invention may be applied to a fuel filter for a gasoline engine or a filter for filtering lubricating oil or any other liquid.

A filter portion 10 includes a casing 12, a closing plate 14, a reinforcing plate 16, an element holding plate 17, a sensor holding plate 18 and an element 20. The element holding plate 17 is formed in a cylindrical shape with the bottom having the inside diameter being substantially equal to the outside diameter of the element 20 to hold the end portion of the element 20 by the side wall thereof. On the bottom portion of the cylindrical element holding plate 17 are formed three tapered portions 17a axially extending to the opposite side thereof so as to positionally correspond to the respective through holes 16b provided in the reinforcing plate 16. At the tip end of each tapered portion 17a is formed a tube portion 17b with the outside diameter being roughly equal to the inside diameter of the through hole 16b, and the tip end portion 17c of each tube portion 17b is fixed to the reinforcing plate 16 by means of caulking. In this way, it is possible to reduce the size of the frame of the housing thereof.

## Claims

1. A filter (1) comprising:
a columnar filter element (20) for filtering fluid;
a housing (12, 14, 16) for housing said filter element (20) and being provided with an inlet portion (16a) and an outlet portion (16b), through which said fluid passes; and
an element holding body (17) formed in a cylindrical shape and being housed within said housing (12, 14, 16) so as to form a circumferential gap (11) with an inner wall surface of said housing (12, 14, 16),
wherein said filter element (20) is inserted into said element holding body (17) from an opening at one end (17e) thereof and is liquid-tightly held at one end (20b) thereof by an outer circumference of the element holding body (17), while the other end (17a, 17b) of the element holding body (17) is liquid-tightly connected to one of said inlet portion (16a) and said outlet portion (16b) so as to separate the fluid flowing in from the inlet portion (16a) and the fluid flowing out to the outlet portion (16b),
**characterized in that**
the other end (17a, 17b) of the element holding body (17) comprises means (17d) for allowing the fluid flowing in from the inlet portion (16a) to pass through said circumferential gap (11) before entering the filtering element end portion (20a) not held by the holding body (17) and reaching the outlet portion (16b), and
the columnar passages of the filter element (20) cover substantially the entire cross section of the filter element.

2. A filter (1) according to claim 1, wherein said element holding body (17) is fixed to one of said inlet portion (16a) and said outlet portion (16b) within said housing (12, 14, 16).

3. A filter (1) according to any one of claims 1 and 2, wherein said inlet portion (16a) and said outlet portion (16b) are lined up in a specific wall surface (16) of said housing, and said fluid having flowed therein from said inlet portion flows through said gap between said outer circumference of said element holding body and said wall surface of said housing.

4. A filter (1) according to claim 3, wherein said other end (17a, 17b) of said element holding body (17) is connected to said outlet portion (16b).

5. A filter (1) according to claim 4, wherein a plurality of said outlet portions (16b) is formed within said housing (12, 14, 16) so as to be disposed around said inlet portion (16a), and the other ends (17a, 17b) of said element holding body (17) are branched in correspondence to said plurality of outlet portions (16b).

6. A filter (1) according to any one of claims 3 through 5, wherein a space portion (13) located on the opposite side of said specific wall surface (16) is formed within said housing (12, 14, 16).

7. A filter (1) according to claim 6, wherein a float type sensor (32) having a float moving in the vertical direction with said specific wall surface (16) as the upper side is provided within said space portion (13) of said housing (12, 14, 16).

8. A filter (1) according to claim 1, wherein said filter element (20) includes:
a corrugated plate (21); and
a flat plate (22); wherein
said element is so formed that the corrugated plate and
said flat plate (22) are alternately laminated, the spaces provided between the front side of said corrugated plate and said flat plate (22) are closed at the side of one end surface with adhesive (23), and the spaces provided between the reverse side of said corrugated plate (21) and said flat plate (22) are closed at the side of the other end surface.

9. A filter (1) according to claim 1 or 8, wherein said housing includes:
a cylindrical casing (12); and
a first plate (16) disposed at one end of said casing (12) with said inlet portion (16a) open at a center portion thereof and a plurality of outlet portions (16b) open around said inlet portion (16a).

10. A filter (1) according to claim 9, wherein said element holding body (17) includes:
a side wall portion formed in a tube shape with the diameter being smaller than the inside diameter of said casing (12), holding said columnar filter element therein, and being coaxially housed within said cylindrical casing (12); and
a bottom portion disposed on the side of said first plate (16) of said tube-shaped portion for defining a bottom portion thereof and provided with connection portions (17a, 17b) connected to said respective plurality of outlet portions (16b).

11. A filter (1) according to claim 10, further comprising:
a detachable second plate (18) disposed on the side of the other end of said casing (12); and
a draining means (34) provided in said plate (18) for draining the fluid from said housing (14, 16).

12. A filter according to claim 11, wherein
a space portion (13) is formed on the side of the second plate (18) within said housing (12, 14, 16), and
said filter further comprising a float type sensor (32) having float moving within said space portion (13) in the vertical direction with the first plate (16) as the upper side is provided on said second plate (18).

13. A filter according to any one of claims 1 to 12, wherein the filter is a fuel filter.

## Patentansprüche

1. Filter (1) mit folgenden Elementen:
ein säulenartiges Filterelement (20) zum Filtern von Fluid;
ein Gehäuse (12, 14, 16) zum Unterbringen des Filterelements (20) und ausgestattet mit einen Einlassabschnitt (16a) und einem Auslassabschnitt (16b), durch welche das Fluid hindurchtritt; und
ein Elementhaltekörper (17), der in einer zylindrischen Form gebildet ist und innerhalb des Gehäuses (12, 14, 16) derart untergebracht ist, um einen Umfangszwischenraum (11) mit einer Innenwandfläche des Gehäuses (12, 14, 16) zu bilden
wobei das Filterelement (20) in den Elementhaltekörper (17) von einer Öffnung an einem Ende (17e) davon eingesetzt ist und flüssigkeitsdicht an einem Ende (20b) davon durch einen Außenumfang des Elementhaltekörpers (17) gehalten wird, während das andere Ende (17a, 17b) des Elementhaltekörpers (17) flüssigkeitsdicht mit dem Einlassabschnitt (16a) oder dem Auslassabschnitts (16b) verbunden ist, um die vom Einlassabschnitt (16a) hineinfließende und von dem Auslassabschnitt (16b) ausfließende Flüssigkeit zu trennen,
**dadurch gekennzeichnet, dass**
das andere Ende (17a, 17b) des Elementhaltekörpers (17) Einrichtungen (17d) aufweist, um dem vom Einlassabschnitt (16a) einfließenden Fluid zu erlauben, vor Eintreten in den Filterelementendabschnitt (20a), der nicht von dem Elementhaltkörper (17) gehalten wird sowie Erreichen des Auslassabschnitts (16b), durch den umfänglichen Zwischenraum (11) hindurchzutreten, wobei die säulenartigen Durchgänge des Filterelements (20) im wesentlichen den gesamten Durchmesser des Filterelements bedecken.

2. Filter (1) gemäß Anspruch 1, wobei der Elementhaltekörper (17) an den Einlassabschnitt (16a) oder Auslassabschnitt (16b) im Innern des Gehäuses (12, 14, 16) befestigt ist.

3. Filter (1) gemäß einen der Ansprüche 1 und 2, wobei der Einlassabschnitt (16a) und der Auslassabschnitt(16b) in einer speziellen Wandfläche (16) des Gehäuses gruppiert sind und das darin von dem Einlassabschnitt ausgeflossene Fluid durch den Zwischenraum zwischen dem Außenumfang des Elementhaltekörpers und der Wandfläche des Gehäuses fließt.

4. Filter (1) gemäß Anspruch 3, wobei das andere Ende (17a, 17b) des Elementhaltekörpers (17) mit dem Auslassabschnitt (16b) verbunden ist.

5. Filter (1) gemäß Anspruch 4 , wobei eine Vielzahl von Auslassabschnitten (16b) innerhalb des Gehäuses (12, 14, 16) gebildet ist, um um den Einlassabschnitt (16a) herum angeordnet zu sein, wobei die anderen Enden (17a, 17b) des Elementhaltekörpers (17) in Übereinstimmung mit der Vielzahl von Auslassabschnitten (16b) verzweigt sind.

6. Filter (1), gemäß einen der Ansprüche 3 bis 5, wobei ein Raumabschnitt (13), der sich an der gegenüberliegenden Seite der speziellen Wandfläche (16) befindet, innerhalb des Gehäuses (12, 14, 16) gebildet ist.

7. Filter (1) gemäß Anspruch 6, wobei ein Schwimmersensor (32), der einen sich in vertikaler Richtung mit der speziellen Wandfläche (16) als der Oberseite, bewegenden Schwimmer hat, innerhalb des Raumabschnitts (13) des Gehäuses (12, 14, 16) angeordnet ist.

8. Filter (1) gemäß Anspruch 1, wobei das Filterelement (20) umfasst,
eine gewellte Platte (21); und
eine flache Platte (22); wobei
das Element so gebildet ist, dass die gewellte Platte und die flache Platte (22) abwechselnd geschichtet sind, wobei die zwischen der Vorderseite der gewellten Platte und der flachen Platte (22) vorgesehenen Räume an der Seite der einen Endfläche mit Klebemittel (23) verschlossen sind und die auf der Rückseite zwischen der gewellten Platte (21) und der flachen Platte (22) vorgesehenen Räume an der Seite der anderen Endfläche verschlossen sind.

9. Filter (1) gemäß Anspruch 1 oder 8, wobei das Gehäuse beinhaltet,
eine zylindrische Unterbringung (12); und
eine erste Platte (16), die an einem Ende der Unterbringung (12) angeordnet ist, mit dem Einlassabschnitt (16a), der an einem Mittelabschnitt von dieser offen ist, und mit einer Vielzahl von Auslassabschnitten (16b), die um den Einlassabschnitt (16a) herum geöffnet sind.

10. Filter (1) gemäß Anspruch 9, wobei der Elementhaltekörper (17) beinhaltet,
einen in einer Rohrform gebildeten Seitenwandabschnitt, dessen Durchmesser kleiner als der Innendurchmesser der Unterbringung(12) ist, der das säulenartige Filterelement darin hält und koaxial innerhalb der zylindrischen Unterbringung (12) untergebracht ist; und
ein an der Seite der ersten Platte (16) des rohrförmigen Abschnitts angeordneter Bodenabschnitt zum Festlegen eines Bodenabschnitts davon und ausgestattet mit Verbindungsabschnitten (17a, 17b), die mit der jeweiligen Vielzahl von Auslassabschnitten (16b) verbunden sind.

11. Filter (1) gemäß Anspruch 10 außerdem aufweisend,
eine abnehmbare zweite Platte (18), die an der Seite des anderen Endes der Unterbringung (12) angeordnet ist; und
eine in der Platte (18) vorgesehene Ablasseinrichtung (34)zum Ablassen des Fluids aus dem Gehäuse (14, 16)

12. Filter gemäß Anspruch 11, wobei
ein Raumabschnitt (13) an der Seite der zweiten Platte (18) innerhalb des Gehäuses (12, 14, 16) gebildet ist, und der Filter außerdem einen Schwimmersensor (32) aufweist, der einen sich innerhalb des Raumabschnitts (13) in vertikaler Richtung mit der ersten Platte (16) als der Oberseite bewegenden Schwimmer hat, der an der zweiten Platte (18) angeordnet ist.

13. Filter gemäß einem der Ansprüche 1 bis 12 wobei der Filter ein Kraftstofffilter ist.

## Revendications

1. Filtre (1) comprenant:
un élément filtrant colonnaire (20) pour filtrer un fluide;
un boîtier (12, 14, 16) pour loger ledit élément filtrant (20) et équipé d'une partie d'entrée (16a) et d'une partie de sortie (16b), par lesquelles lesdits fluides passent, et
un corps (17) de retenue de l'élément, qui est agencé avec une forme cylindrique et est logé à l'intérieur dudit boîtier (12, 14, 16) de manière à former un interstice circonférentiel (11) avec une surface de paroi intérieure dudit boîtier (12, 14, 16),
dans lequel ledit élément filtrant (20) est inséré dans ledit corps (17) de retenue de l'élément, à partir d'une ouverture située à une extrémité (17e) de ce corps et est retenu d'une manière étanche aux liquides à l'une de ses extrémités (20b) par une circonférence extérieure du corps (17) de retenue de l'élément, tandis que l'autre extrémité (17a, 17b) du corps (17) de retenue de l'élément est raccordée d'une manière étanche aux liquides à l'une de ladite partie d'extrémité (16a) et de ladite partie de sortie (16b) de manière à séparer le fluide pénétrant par la partie d'entrée (16a) et le fluide sortant par la partie de sortie (16b),
**caractérisé en ce que**
l'autre extrémité (17a, 17b) du corps (10) de retenue de l'élément comprend des moyens (17d) pour permettre au fluide de pénétrer dans la partie d'entrée (16a) pour traverser ledit interstice circonférentiel (11) avant de pénétrer dans la partie d'extrémité (20a) de l'élément filtrant, non retenue par le corps de retenue (17) et atteindre la partie de sortie (16b), et
les passages colonnaires de l'élément filtrant (20) recouvrent pour l'essentiel la totalité de la section transversale de l'élément de filtre.

2. Filtre (1) selon la revendication 1, dans lequel ledit corps (17) de retenue de l'élément est fixé à l'une de ladite partie d'entrée (7a) et de ladite partie de sortie (7b) à l'intérieur dudit boîtier (12, 14, 16).

3. Filtre (1) selon l'une quelconque des revendications 1 et 2, dans lequel ladite partie d'entrée (7a) et ladite partie de sortie (7b) sont alignées dans une surface de paroi spécifique (16) dudit boîtier, et ledit fluide, qui y a pénétré en provenant de ladite partie d'entrée, traverse ledit interstice présent entre ladite circonférence extérieure dudit corps retenant l'élément et ladite surface de paroi dudit boîtier.

4. Filtre (1) selon la revendication 3, dans lequel ladite autre extrémité (17a, 17b) dudit corps (17) retenant l'élément est raccordée à ladite partie de sortie (16b).

5. Filtre (1) selon la revendication 4, dans lequel une pluralité desdites parties de sortie (16b) sont formées dans ledit boîtier (12, 14, 16) de manière à être disposées autour de ladite partie d'entrée (16a), et les autres extrémités (17a, 17b) dudit corps (17) retenant l'élément sont raccordées de manière à correspondre à ladite pluralité de parties de sortie (16b).

6. Filtre (1) selon l'une quelconque des revendications 3 à 5, dans lequel une partie d'espace (13) située sur le côté opposé de ladite surface de paroi spécifique (16) est formée dans ledit boîtier (12, 14, 16).

7. Filtre (1) selon la revendication 6, dans lequel un capteur (32) du type à flotteur, qui comporte un flotteur se déplaçant dans la direction verticale avec ladite surface de paroi spécifique (16) lorsque le côté supérieur pourvu de ladite partie d'espace (13), est prévu dans ladite partie d'espace (13) dudit boîtier (12, 14, 16).

8. Filtre (1) selon la revendication 1, dans lequel ledit élément filtrant (20) comprend:
une plaque cannelée (21); et
une plaque plane (22);
dans lequel ledit élément est formé de telle sorte que la plaque cannelée (21) et ladite plaque plane (22) sont superposées d'une manière alternée, les espaces prévus le côté avant de ladite plaque cannelée et ladite plaque plane (22) étant fermés du côté d'une surface extrémité avec un adhésif (23) et les espaces prévus entre le côté opposé de ladite plaque cannelée (21) et ladite plaque plane (22) sont fermés du côté de l'autre surface d'extrémité.

9. Filtre (1) selon l'une des revendications 1 à 8, **caractérisé en ce que** ledit boîtier comprend:
une enceinte cylindrique (12); et
une première plaque (16) disposée à une extrémité de ladite enceinte (12) équipée de ladite partie d'entrée (16a), ladite partie d'entrée (16a) étant ouverte au niveau d'une partie centrale, et une pluralité de parties de sortie (16b) s'ouvrant autour de ladite partie d'entrée (16a).

10. Filtre (1) selon la revendication 9, dans lequel ledit corps (17) de maintien de l'élément comprend:
une partie de paroi latérale réalisée avec la forme d'un tube, dont le diamètre est inférieur au diamètre intérieur de ladite enceinte (12) et qui retient ledit élément filtrant colonnaire en elle, et qui est logé coaxialement dans ladite enceinte cylindrique (12); et
une partie de fond disposée du côté de ladite première plaque (16) de ladite partie en forme de tube pour définir une portion de fond de cette partie et comportant des parties de raccordement (17a, 17b) raccordées à ladite pluralité respective de parties de sortie (16b).

11. Filtre (1) selon la revendication 10, comprenant en outre:
une seconde plaque détachable (18) disposée du côté de l'autre extrémité de ladite enceinte (12); et
des moyens de drainage (34) prévus dans ladite plaque (18) pour drainer le fluide à partir dudit boîtier (14, 16).

12. Filtre selon la revendication 11, dans lequel
une partie d'espace (13) est formée du côté de la seconde plaque (18) dans ledit boîtier (12, 14, 16), et
ledit filtre comprenant en outre un capteur (32) du type à flotteur, comportant un flotteur se déplaçant dans ladite partie d'espace (13) dans la direction verticale conjointement avec la première plaque (16) lorsque le côté supérieur est prévu sur ladite seconde plaque (18).

13. Filtre selon l'une quelconque des revendications 1 à 12, dans lequel le filtre est un filtre à carburant.
